# EUROPÄISCHE PATENTSCHRIFT

(11) **EP 1 716 962 B1**
(45) Veröffentlichungstag und Bekanntmachung des Hinweises auf die Patenterteilung: **18.02.2009**
(21) Anmeldenummer: 05009403.6
(22) Anmeldetag: 29.04.2005
(51) Int. Cl.: B23K 26/06, B23K 26/03, G02B 26/08

(54) **Einrichtung mit einem adaptiven Spiegel zur Veränderung der Fokuseigenschaften einer Laserbearbeitungsmaschine**
Device with an adaptive mirror for modifying the focus characteristics of a laser working machine
Dispositif avec un miroir adaptatif pour modifier les caractéristiques de focalisation d'une machine d'usinage laser

(43) Veröffentlichungstag der Anmeldung: 02.11.2006
(73) Patentinhaber: TRUMPF Werkzeugmaschinen GmbH + Co. KG, 71254 Ditzingen (DE)
(72) Erfinder: Weick, Jürgen-Michael, 71679 Asperg (DE); Stegemann, Carsten, 71254 Stuttgart (DE)
(74) Vertreter: Kohler Schmid Möbus

(56) Entgegenhaltungen:
- DE-A1- 3 809 284
- DE-A1- 4 236 355
- US-A1- 2001 045 419
- US-A1- 2002 080 845
- US-B1- 6 353 203
- US-B1- 6 785 028
- PATENT ABSTRACTS OF JAPAN Bd. 013, Nr. 365 (M-859), 15. August 1989 (1989-08-15) -& JP 01 122688 A (SUMITOMO ELECTRIC IND LTD), 15. Mai 1989 (1989-05-15)

## Beschreibung

Die Erfindung betrifft eine Laserbearbeitungsmaschine, insbesondere eine Laserschneidmaschine mit einem CO₂-Laser, gemäß dem Oberbegriff von Anspruch 1.

Eine derartige Laserbearbeitungsmaschine ist beispielsweise durch US 2001/045419 A1 bekannt geworden.

Durch Erwärmung des Lasers und der an der Strahlführung beteiligten Komponenten kommt es zu Verschiebungen der Fokuslage des fokussierten Strahls. Je nach Grössenordnung dieser Verschiebung führt dies unweigerlich zu Einbußen hinsichtlich Bearbeitungsgeschwindigkeit und Schnittqualität.

Durch erwärmungsbedingte Effekte am Auskoppelspiegel eines CO₂-Lasers kommt es nach dem Einschalten des CO₂-Lasers zu einer Verschiebung der Strahltaille und somit zu Änderungen von Divergenzwinkeln und Strahldurchmessern im Arbeitsraum der Laserbearbeitungsmaschine. Daraus resultieren unerwünschte Änderungen der Fokussiereigenschaften des Laserstrahls während der Materialbearbeitung. Des Weiteren verstärken sich die beschriebenen Effekte auch alterungs- und verschmutzungsbedingt.

Da die Schneideigenschaften einer Laserbearbeitungsmaschine mitunter maßgeblich von den Fokussierbedingungen abhängen und diese aber den beschriebenen Schwankungen unterliegen, muss das Prozessfenster des jeweils gewünschten Bearbeitungsvorganges so weit vergrössert werden, dass die Schwankungen mit berücksichtigt werden. Diese Vergrösserung geht meist zulasten der Bearbeitungsgeschwindigkeit.

Die aus US 2001/045419 A1 bekannte Laserbearbeitungsmaschine umfasst einen Laser mit einem Auskoppelspiegel, einem nach dem Auskoppelspiegel angeordneten adaptiven Spiegel zur Führung des Laserstrahls zu einer Fokussierlinse und eine Regeleinheit, die am adaptiven Spiegel Fokusänderungen entsprechend den Ablenkungen des Laserstrahls einstellt.

Der Anmelder hat sich die Aufgabe gestellt, bei einer Laserbearbeitungsmaschine der eingangs genannten Art unabhängig von Belastungs-, Alters- und Verschmutzungszustand des Auskoppelspiegels gleichbleibende Fokussierbedingungen im Arbeitsraum des Laserstrahls zu erreichen.

Diese Aufgabe wird durch eine Laserbearbeitungsmaschine gemäß Patentanspruch 1 gelöst. Patentansprüche 2 und 3 betreffen sinnvolle Weiterbildungen der Erfindung.

Mithilfe der Erfindung ist thermische Belastung des Auskoppelspiegels und/ oder der Linse mit einer Sensorik möglich. Die wesentlichen Eigenschaften und Vorteile dieser Erfindung lassen sich anhand folgender Punkte zusammenfassen:
1. Steuerung der Fokuslage als Funktion aus Zeit, Strahlleistung und Arbeitsposition;
2. Die Art der leistungsabhängigen Strahlpropagation spielt keine Rolle;
3. Es sind kürzere Strahlwege als bisher möglich;
4. In einem weiteren Entwicklungsschritt wird die Fokuslage mit einer Regelung überwacht und korrigiert.

Drei Ausführungsbeispiele der Erfindung sind in der Zeichnung schematisch dargestellt und werden nachfolgend mit Bezug zu den Figuren der Zeichnung näher erläutert. Es zeigt im Einzelnen:
- **Figur 1**: eine nicht erfindungsgemäße Einrichtung zur Steuerung der Fokuseigenschaften;
- **Figur 2**: eine nicht erfindungsgemäße Einrichtung zur Regelung der Fokuseigenschaften;
- **Figur 3**: die erfindungsgemäße Einrichtung zur Regelung der Fokuseigenschaften.

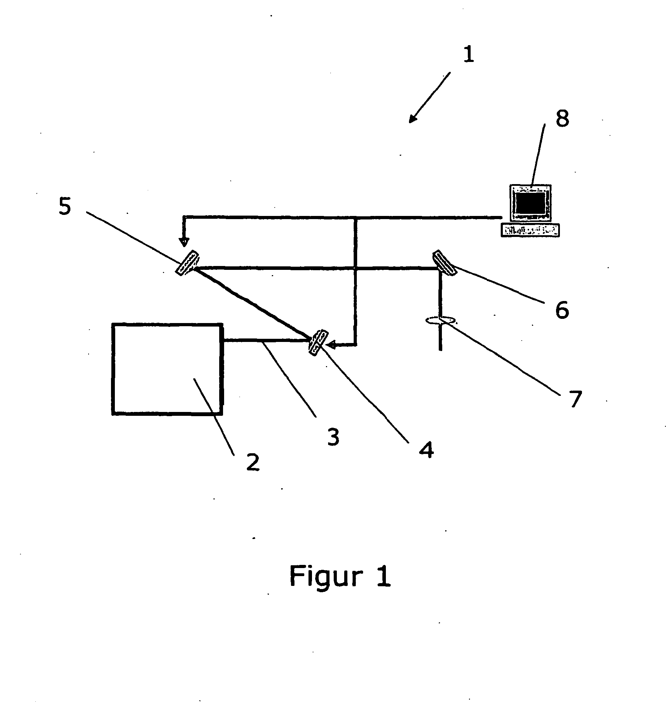

Aus der **Figur 1** ist der Aufbau einer Einrichtung **1** zur Steuerung der Fokuseigenschaften ersichtlich. Ein den CO₂-Laser **2** verlassender Laserstrahl **3** wird mithilfe zweier adaptiver Spiegel **4** und **5** und einem Umlenkspiegel **6** zu einer Fokussierlinse **7** geführt. Durch die Ansteuerung zweier adaptiver Spiegel 3 und 4 in der Strahlführung unter Zuhilfenahme von zuvor aufgenommenen, und in einer Steuereinheit **8** abgespeicherten Leistungs-Arbeitsraum-Kennfeldern für die Fokuslage einer jeden Brennweite und der Zeitabhängigkeit dieser Kennfelder kann der Fokusverschiebung entgegengewirkt werden.

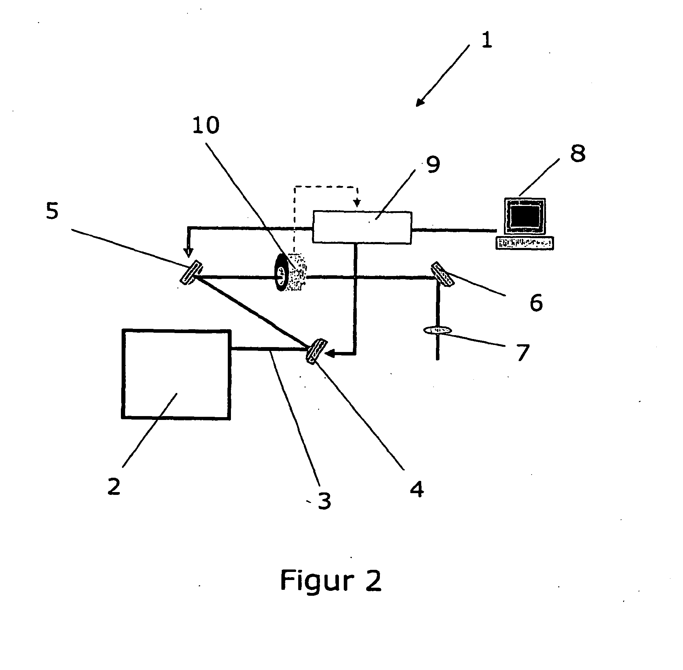

Gemäß **Figur 2** wird das oben beschriebene Steuerungsprinzip um ein Strahldiagnosesystem mit einer Regelung **9** und mit einem Sensor **10** in der Strahlführung ergänzt. Beispielsweise dient der mithilfe des Sensors 10 des Strahldiagnosesystems ständig ermittelte Laserstrahldurchmesser als Rückführgröße, an der die Regelung 9 geführt wird. Vorteil des Regelungsprinzips ist eine weitestgehende Unanfälligkeit des Gesamtsystems gegenüber alterungs- oder verschmutzungsbedingten Einflüssen oder anderen Effekten. Durch diese Arten der Kompensation ist es möglich, in Zusammenhang mit einer geeigneten Maßnahme zur Randfeldminimierung auch kürzeste Strahlweglängen zu realisieren

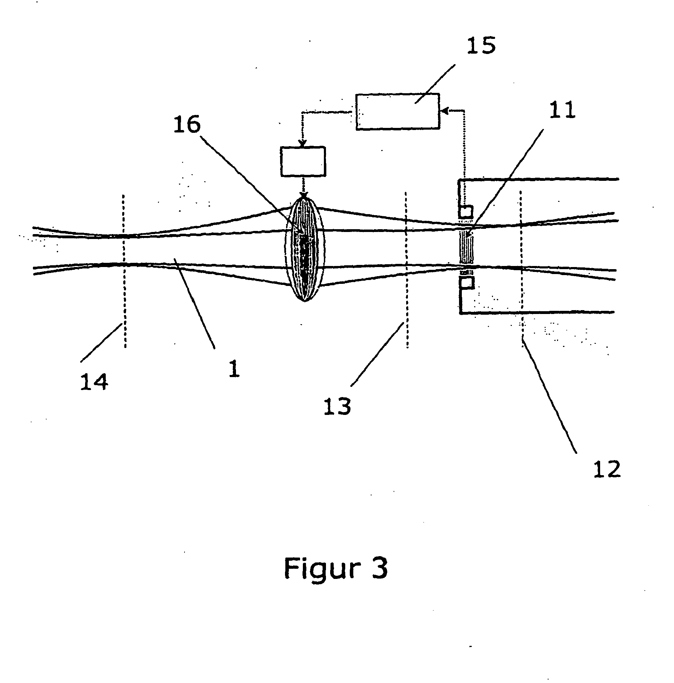

Die Lage der Strahltaille des Laserstrahls 3 hängt von der Belastung eines Auskoppelspiegels **11** des Lasers 2 ab: Taillenlage bei hoher Laserleistung **12,** Taillenlage bei geringer Laserleistung **13,** leistungsunabhängige Taillenlage **14.** Jedem Belastungsfall kann anhand einer Kennlinie ein Verschiebungsmaß der Taille zugeordnet werden. Gemäß der Erfindung durch Messung der Auskopplerbelastung mit einer Sensorik und einer Auswerteinheit **15** für die Auskoppelspiegeltemperatur, wie in **Figur 3** gezeigt, kann in Verbindung mit einem adaptiven Spiegel **16** das jeweilige Maß der Verschiebung wieder ausgeregelt werden. Das Resultat sind unabhängig von Belastungs-, Alters- und Verschmutzungszustand des Auskoppelspiegels gleichbleibende Fokussierbedingungen im Arbeitsraum. Es müssen daher keine Schwankungen mehr berücksichtigt werden, wodurch höhere Bearbeitungsgeschwindigkeiten erzielt werden können. Bei der Sensorik handelt es sich um eine berührungslose Temperaturmessung. Aus Voruntersuchungen mit der thermischen Fokussierung von Linsen ist bekannt, dass die Fokussierwirkung (das Maß, um das der Fokus in Strahlrichtung verlagert wird) alleine vom Temperaturgradienten in der Linse und nicht von deren Brennweite abhängt. Da der Temperaturgradient auch eine Beziehung zur maximalen Temperarur in der Mitte der Optik hat, bestehen realistische Chancen, aus diesem Messwert eine hinreichend genaue Größe zu erhalten, die eine Regelung des Strahles, der den Laser verlässt, erlaubt. Die gleiche Vorgehensweise ist auch bei der Linse möglich, um die axiale Fokusverschiebung, die in den ersten 10-20 Sekunden nach Einschalten des Strahles auftritt, mittels des vorgeschaltenen adaptiven Spiegels auszuregeln

### BEZUGSZEICHENLISTE

- 1: Einrichtung zur Steuerung der Fokuseigenschaften
- 2: CO₂-Laser
- 3: Laserstrahl
- 4: adaptiver Spiegel
- 5: adaptiver Spiegel
- 6: Umlenkspiegel
- 7: Fokussierlinse
- 8: Steuereinheit
- 9: Regelung
- 10: Sensor
- 11: Auskoppelspiegel
- 12: Taillenlage bei hoher Laserleistung
- 13: Taillenlage bei geringer Laserleistung
- 14: leistungsunabhängige Taillenlage
- 15: Auswerteinheit
- 16: adaptiver Spiegel

## Patentansprüche

1. Laserbearbeltungsmaschine mit einem Laser, der einen Auskoppelspiegel (11) aufweist, ferner mit einem nach dem Auskoppelspiegel (11) angeordneten adaptiven Spiegel (16) zur Führung des Laserstrahls (1) zu einer Fokussierlinse und mit einer Regeleinheit (15) zum Regeln des adaptiven Spiegels (16) in Abhängigkeit des zeitvarianten thermischen Verhaltens des Laserstrahls (1),
**gekennzeichnet durch** einen Sensor zur Erfassung der Temperatur des Auskoppelspiegels (11).

2. Laserbearbeitungsmaschine nach Anspruch 1, **dadurch gekennzeichnet, dass** die Regeleinheit (15) mit einem Strahldiagnosesystem verbunden ist.

3. Laserbearbeitungsmaschine nach Anspruch 1 oder 2,
**dadurch gekennzeichnet, dass** die Regeleinheit (15) mit einer Systemcharakteristik verbunden ist.

## Claims

1. Laser processing machine having a laser which has a decoupling mirror (11), further having an adaptive mirror (16) which is arranged downstream of the decoupling mirror (11) in order to guide the laser beam (1) to form a focusing lens, and having a control unit (15) for controlling the adaptive mirror (16) in accordance with the time-variant thermal characteristics of the laser beam (1),
**characterised by** a sensor for detecting the temperature of the decoupling mirror (11).

2. Laser processing machine according to claim 1,
**characterised in that** the control unit (15) is connected to a beam diagnosis system.

3. Laser processing machine according to claim 1 or claim 2, **characterised in that** the control unit (15) is connected to a system characteristics unit.

## Revendications

1. Machine d'usinage au laser avec un laser qui présente un miroir de sortie (11), avec un miroir adaptatif (16) disposé après le miroir de sortie (11) pour guider le faisceau laser (1) vers une lentille de focalisation et avec une unité de régulation (15) pour régler le miroir adaptatif (16) en fonction du comportement thermique variable dans le temps du faisceau laser (1),
**caractérisée par** un capteur pour saisir la température du miroir de sortie (11).

2. Machine d'usinage au laser selon la revendication 1, **caractérisée en ce que** l'unité de régulation (15) est reliée à un système de diagnostic de faisceau.

3. Machine d'usinage au laser selon la revendication 1 ou 2, **caractérisée en ce que** l'unité de régulation (15) est reliée à une caractéristique du système.
